# FASCICULE DE BREVET EUROPEEN

(11) **EP 0 858 924 B1**
(45) Date de publication et mention de la délivrance du brevet: **16.10.2002**
(21) Numéro de dépôt: 98101888.0
(22) Date de dépôt: 04.02.1998
(51) Int. Cl.: B60K 37/06, B60Q 3/04

(54) **Tableau de commande pour une planche de bord de véhicule automobile**
Steuertafel für ein Armaturenbrette ines Kraftfahrzeuges
Control panel for the dashboard of an automotive vehicle

(30) Priorité: 07.02.1997 FR 9701445
(43) Date de publication de la demande: 19.08.1998
(73) Titulaire: Valeo Electronique, 94042 Créteil (FR)
(72) Inventeur: Beraud, Henry, 94300 Vincennes (FR); Lacroix, Louis, 92370 Chaville (FR)
(74) Mandataire: Lemaire, Marc

(56) Documents cités:
- DE-A- 19 519 113
- DE-C- 3 728 756

## Description

L'invention concerne un tableau de commande propre à être logé dans une planche de bord de véhicule automobile.

Elle concerne plus particulièrement un tableau de commande comprenant au moins deux modules logeant des organes de commande respectifs ainsi qu'une façade munie d'ouvertures pour le passage des organes de commande.

On connaît déjà, d'après FR-A-2 720 339, un tableau de commande du type utilisé pour la présentation en deux parties de la revendication 1 et qui sert à la commande d'un équipement implanté dans le véhicule, par exemple un dispositif de chauffage et/ou de climatisation.

Les organes de commande que comporte le tableau de commande peuvent être, par exemple, des organes rotatifs, des organes du type poussoir ou touche à enfoncement, des curseurs, etc.

De plus, un tel tableau de commande doit en outre comporter des moyens d'éclairage destinés à éclairer des zones choisies de la façade et des organes de commande pour permettre au conducteur ou aux passagers du véhicule de repérer les organes de commande et leurs positions respectives, en conduite de nuit.

Ainsi, de tels tableaux de commande doivent comporter, dans un espace réduit, un certain nombre d'organes assumant des fonctions spécifiques, en particulier des organes de commande et des organes d'éclairage.

Les organes de commande sont le plus souvent de type mécanique et agissent sur des actionneurs mécaniques, notamment sur des leviers ou des secteurs angulaires propres à pivoter sur un intervalle angulaire limité afin d'assurer la commande d'une pièce mécanique.

Il peut s'agir aussi d'organes de type électrique, qui sont reliés à un circuit électrique, par exemple à un circuit imprimé, ou à un circuit de pistes découpées dans une plaque en métal cuivreux, logé dans le tableau de commande.

Les tableaux de commande connus ont notamment pour inconvénient de posséder une structure complexe qui nuit à leur fabrication en grande série sur des chaînes automatisées de montage.

Un autre inconvénient de ces tableaux de commande connus est qu'ils conviennent, à chaque fois, à un type de véhicule donné, ce qui nuit à la standardisation.

En effet, même si en théorie un même tableau de commande pourrait être utilisé sur différents types de véhicules, il existe des contraintes, notamment d'encombrement et d'intégration dans la planche de bord, qui font qu'un même tableau de commande ne peut convenir qu'à un type de véhicule donné.

Un autre problème tient au fait qu'un même tableau de commande convient pour un certain niveau d'équipement d'un véhicule donné, et ne peut pas être utilisé dans le même véhicule pour un autre niveau d'équipement.

Ainsi, par exemple, un tableau de commande convenant à un dispositif de chauffage dépourvu de climatisation, ne peut convenir à la commande d'un dispositif de chauffage analogue mais équipé de l'option climatisation.

En outre, le tableau de commande selon FR-A-2 720 339, bien que possédant une structure modulaire, n'apporte aucune solution pour résoudre de façon simple les problèmes d'éclairage de la façade et des organes de commande.

L'invention a notamment pour but de surmonter les inconvénients précités.

C'est en particulier un but de l'invention de procurer un tableau de commande de structure compacte pouvant s'encastrer facilement dans un logement d'une planche de bord de véhicule automobile.

C'est encore un but de l'invention de procurer un tableau de commande pouvant être utilisé pour différents types de véhicules ou pour différents niveaux d'équipement d'un même type de véhicule.

L'invention propose à cet effet un tableau de commande du type défini en introduction, comprenant un module principal et au moins un module secondaire fixé directement sur une face latérale du module principal par des moyens de fixation, logeant des organes de commande respectifs ainsi qu'une façade munie d'ouvertures pour le passage des organes de commande et comprenant un module principal logeant un organe de commande et des moyens d'éclairage pour éclairer des zones choisies de la façade et de l'organe de commands, ainsi qu'au moins un module secondaire logeant un organe de commands et étant propre à être éclairé par les moyens d'éclairage du module principal par l'intermédiaire d'une fenêtre situé entre le module principale et le module secondaire qui communique avec une fenêtre du module principal.

Ainsi, le tableau de commande de l'invention présente une structure modulaire qui comprend, pour l'essentiel, un module principal qui loge un organe de commande et des moyens d'éclairage, auxquels on peut ajouter un ou plusieurs modules secondaires, en fonction du véhicule auquel le tableau de commande est destiné.

Le ou chaque module secondaire loge son propre organe de commande et est dépourvu de moyens d'éclairage, puisque, après mise en place, il bénéficie de l'éclairage procuré par le module principal qui lui est contigü. Ainsi, il est possible d'éclairer l'organe de commande du (des) module (s) secondaire (s) ainsi que les zones choisies de la façade ou d'éléments de façade correspondant aux modules secondaires grâce aux moyens d'éclairage du module principal.

Cette conception modulaire permet, à partir d'un petit nombre de modules de base, de réaliser un grand nombre de tableaux de commande de types différents.

Dans une forme de réalisation préférée de l'invention, le module principal comporte deux faces latérales opposées propres à permettre chacune la fixation d'un module secondaire.

Il en résulte que le tableau de commande comportera habituellement un module principal et deux modules secondaires situés de part et d'autre du module principal.

Dans une forme de réalisation préférée de l'invention, les moyens de fixation sont conjugués et comprennent des premiers moyens prévus sur au moins une face latérale du module principal et des seconds moyens prévus sur au moins une face latérale du module secondaire.

De façon avantageuse, le module secondaire comporte quatre faces latérales disposées selon une configuration carrée et des seconds moyens de fixation prévus sur chacune des quatre faces latérales, ce qui permet de disposer le module secondaire dans l'une quelconque de quatre positions différentes par rapport au module principal.

Ceci peut être avantageux pour donner une orientation privilégiée au module secondaire, notamment à l'organe de commande que comporte ledit module secondaire.

Selon une autre caractéristique de l'invention, les moyens de fixation sont des moyens à encliquetage, ce qui favorise un assemblage rapide des modules.

De façon avantageuse, les moyens de fixation à encliquetage comprennent deux fourches en U prévues sur une face latérale du module principal et propres à coopérer avec deux fûts que comporte le module secondaire.

Dans une forme de réalisation préférée, le module secondaire comporte quatre fûts d'axes parallèles, disposés aux angles d'un carré et autorisant la fixation du module secondaire dans l'une quelconque de quatre positions différentes par rapport au module principal. Avantageusement, chaque fût est creux pour former un puits de passage d'une vis de fixation.

Selon une autre caractéristique avantageuse de l'invention, le module principal comporte une boîte à lumière dans laquelle sont logés les moyens d'éclairage et munie d'au moins une fenêtre débouchant sur la face latérale pour permettre l'éclairage du module secondaire.

De façon préférentielle, la boîte à lumière du module principal comporte deux fenêtres débouchant sur deux faces latérales opposées, les moyens d'éclairage comprenant deux lampes situées dans la boîte à lumière à proximité respectivement de chacune des deux fenêtres.

Dans une forme de réalisation de l'invention, la boîte à lumière du module principal comporte une partie principale en forme de croissant propre à éclairer une zone d'éclairage en arc de cercle du module principal.

La boîte à lumière précitée peut comporter en outre deux parties secondaires propres à éclairer chacune une zone d'éclairage circulaire et aboutissant chacune à une lampe des moyens d'éclairage.

Le module secondaire comporte avantageusement une boîte à lumière munie d'une fenêtre débouchant au niveau d'une face latérale et propre à venir en vis-à-vis d'une fenêtre du module principal.

Ainsi, lorsque le module secondaire est fixé au module principal, leurs boîtes à lumière respectives communiquent entre elles par leurs fenêtres respectives.

Dans une forme de réalisation préférée de l'invention, la boîte à lumière du module secondaire comporte quatre parties frangibles disposées opposées deux à deux et susceptibles de constituer chacune une fenêtre. Ainsi, le module secondaire peut être placé dans l'une quelconque de quatre positions, et la fenêtre de la boîte à lumière est alors obtenue en brisant la partie frangible située en regard de la fenêtre de la boîte à lumière du module principal.

De façon avantageuse, la boîte à lumière du module secondaire possède un contour de forme générale octogonale et comporte, de façon alternée, quatre côtés dans lesquels sont prévues les parties frangibles précitées et quatre côtés situés chacun près d'un fût de fixation.

Dans une forme de réalisation préférée de l'invention, l'organe de commande du module principal est un organe rotatif et, de même, l'organe de commande du module secondaire est un organe rotatif.

Dans une forme de réalisation de l'invention, les zones d'éclairage de la façade sont prévues sur le module principal et le(s) module(s) secondaire(s).

Dans une autre forme de réalisation, les zones d'éclairage de la façade sont prévues sur un élément de façade commun au module principal et au(x) module(s) secondaire(s).

Dans la description qui suit, faite seulement à titre d'exemple, on se réfère aux dessins annexés, sur lesquels :
- la figure 1 est une vue de face d'un tableau de commande selon l'invention formé d'un module principal et de deux modules secondaires, avant assemblage de ces derniers, et avant mise en place de la façade;
- la figure 2 est une vue analogue à celle de la figure 1, après assemblage des modules entre eux;
- la figure 3 est une vue analogue à la figure 2 après mise en place d'une partie de la façade;
- la figure 4 est une vue en perspective du tableau de commande assemblé selon la figure 2;
- la figure 5 est une autre vue en perspective du tableau de commande de la figure 3, les modules étant représentés séparés, après mise en place des organes de commande;
- la figure 6 est une vue en perspective par l'arrière, du tableau de commande avant assemblage des modules entre eux;
- la figure 7 est une vue analogue à celle de la figure 6 après assemblage des modules entre eux; et
- la figure 8 est une vue de face d'un tableau de commande dans une variante de réalisation.

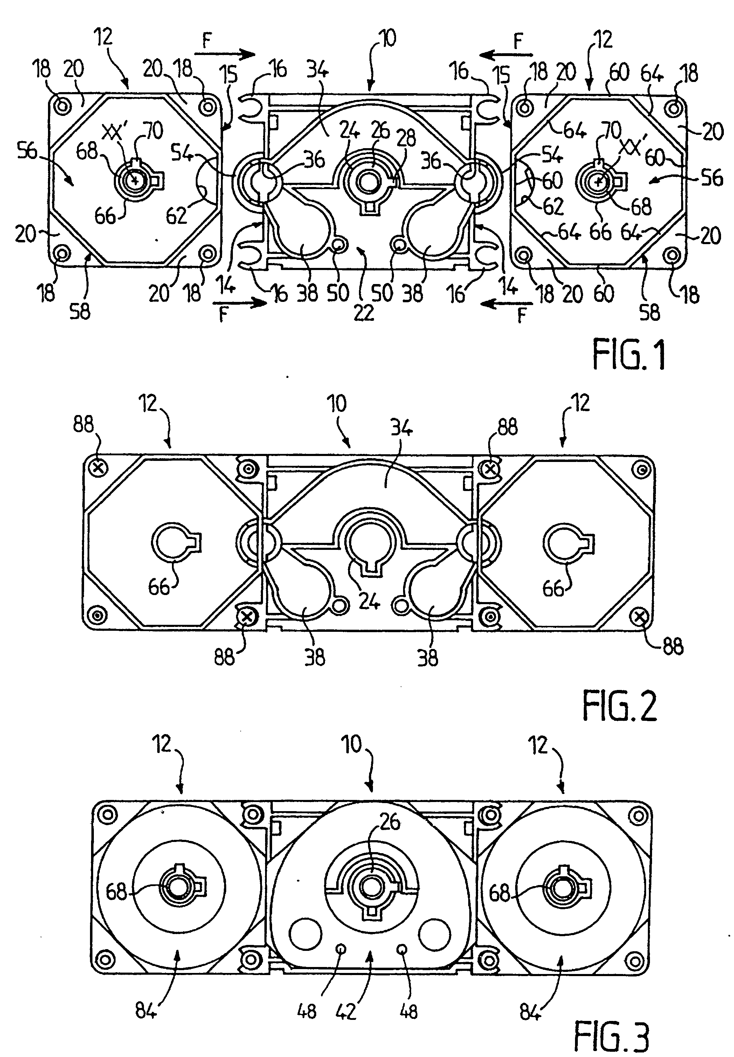

Le tableau de commande de la figure 1 comprend un module principal 10 et deux modules secondaires 12, de structure identique, propres à être fixés de part et d'autre du module principal 10 par encliquetage, comme montré par les flèches F. Le module principal 10 possède, en vue de face, une forme générale rectangulaire et comporte, notamment, deux faces latérales opposées 14 qui constituent des faces d'assemblage ou de raccordement pour des faces latérales 15 des modules secondaires 12. Chacune des faces 14 est pourvue de deux fourches 16 en forme de U propres à coopérer avec deux fûts 18 que comporte chaque module secondaire 12. Chacun des modules secondaires 12 comporte en fait quatre fûts 18 d'axes parallèles disposés aux angles d'un carré, chacun des fûts 18 étant solidaire d'une nervure 20 de forme triangulaire.

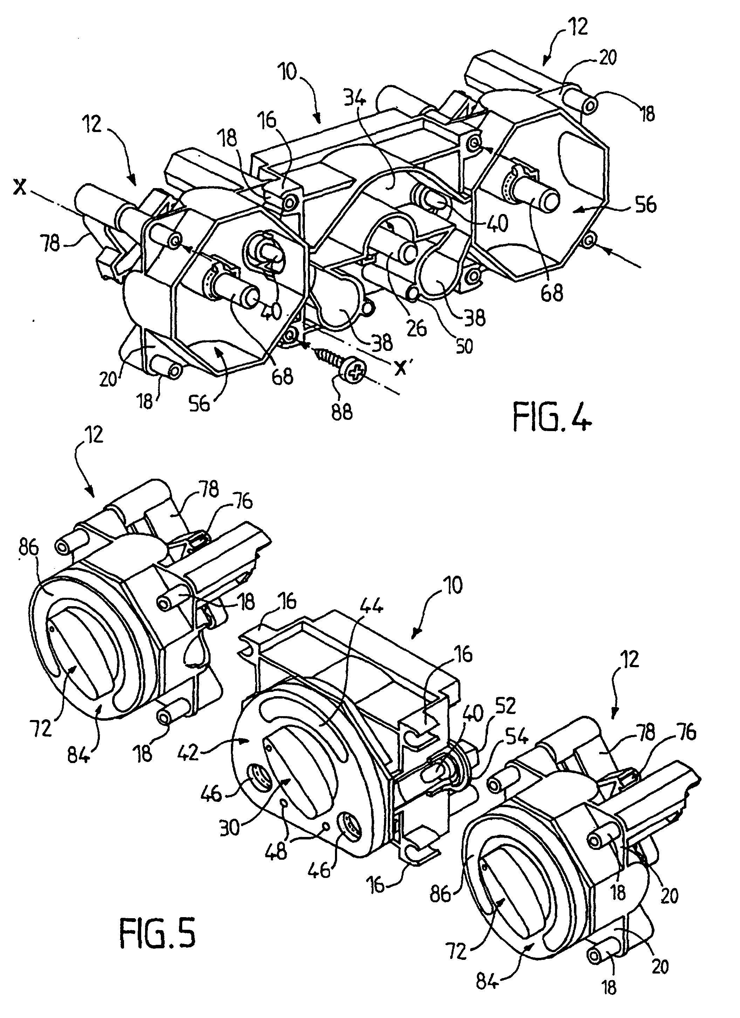

Ainsi, chaque module 12 peut être placé dans l'une quelconque de quatre positions différentes par rapport au module principal 10, pour lui donner une orientation choisie. Ces quatre positions se déduisent l'une de l'autre par rotation autour d'un axe XX (figures 1 et 4).

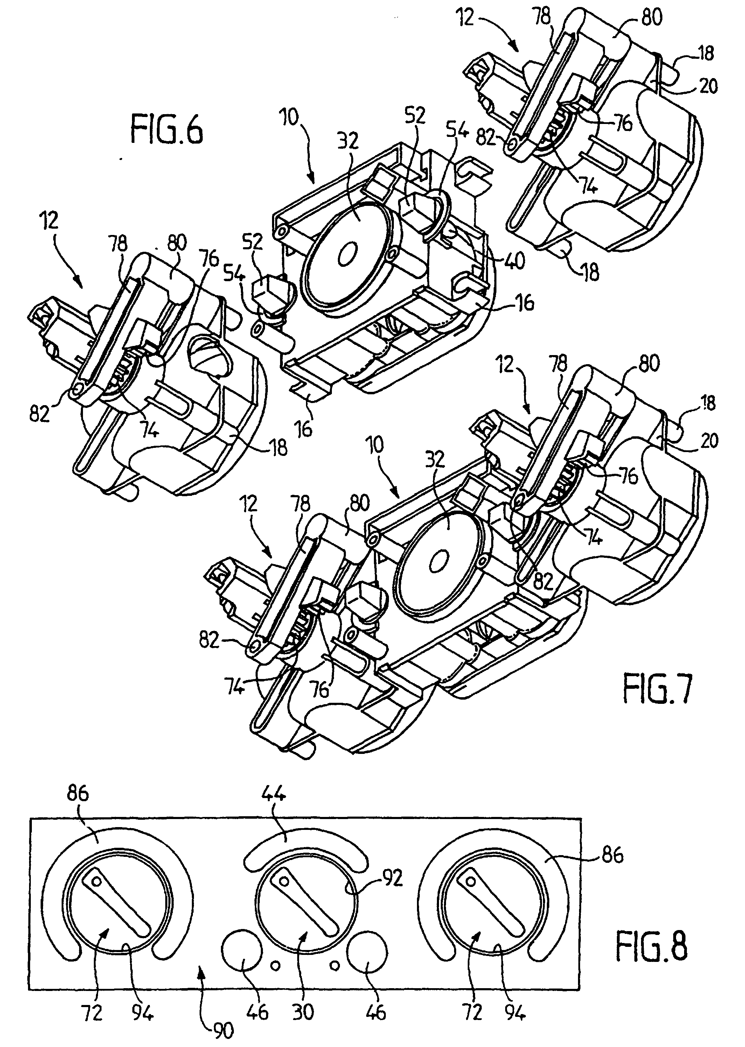

Les faces latérales 14 du module principal 10 sont reliées perpendiculairement à un fond 22 de forme générale rectangulaire muni d'un passage central 24 d'axe XX' (figure 4) à l'intérieur duquel peut tourner un organe de commande 26 muni d'un ergot 28 (figure 1) et destiné à recevoir un bouton 30 (figure 5).

Dans l'exemple, l'organe de commande 26 est relié à un actionneur 32 du type électrique, situé de l'autre côté du fond 22 (figures 6 et 7).

Le module principal 10 comporte une boîte à lumière ayant une partie principale 34 en forme de croissant qui s'élève à partir du fond 22 et qui contourne le passage 24 (figures 1 et 4). Cette boîte à lumière est interrompue par deux fenêtres 36 débouchant respectivement dans les deux faces latérales 14 du module principal 10.

La boîte à lumière comprend également deux parties secondaires 38 aboutissant chacune à une des fenêtres 36 précitées (figures 1 et 4). Le module principal 10 comporte des moyens d'éclairage logés dans la boîte à lumière et constitués de deux lampes 40 (figures 4, 5 et 6) propres à éclairer à la fois la partie principale 34 et les deux parties secondaires 38 de la boîte à lumière du boîtier principal et aussi des boîtes à lumière respectives des deux modules secondaires 12, qui seront décrites plus loin.

Comme on peut le voir sur la figure 5, le module principal 10 comporte un élément de façade 42 traversé par le bouton 30 et comportant une zone d'éclairage 44 en forme d'arc de cercle susceptible d'être éclairée par la partie principale 34 de la boîte à lumière, ainsi que deux zones d'éclairage 46 de forme circulaire susceptibles d'être éclairées respectivement par les deux parties secondaires 38 de la boîte à lumière. En outre, l'élément de façade 42 est muni de deux autres zones d'éclairage 48 (figures 3 et 5) qui sont éclairées de façon isolée par des diodes électroluminescentes (non représentées) disposées à l'arrière du module, par l'intermédiaire de fûts 50 rattachés au fond 22 (figures 1 et 4).

Chacune des lampes 40 est montée dans un porte-lampe 52 rattaché au fond 22 et entouré par une nervure 54 en forme d'arc de cercle (figure 6) propre à coopérer à emboîtement avec un module secondaire 12, comme on le verra plus loin.

Chaque module secondaire 12 comporte une boîte à lumière 56 ayant la forme d'un bol possédant un bord périphérique 58 à contour octogonal (figure 1). Ce bord 58 comporte quatre côtés 60, dont l'un quelconque peut venir en vis-à-vis d'une face latérale 14 du module principal. Chacun des côtés 60 comporte une partie frangible, ce qui permet, lorsque cette partie frangible est enlevée, de réaliser une fenêtre 62 qui communique avec la fenêtre 36 du module principal. La boîte à lumière 56 est en outre délimitée par quatre autres côtés 64 reliant deux à deux les côtés 60 et situés chacun près d'un fût 18. Autrement dit, les quatre côtés 60 comportant chacun une partie frangible et les quatre côtés 64 situés chacun près d'un fût 18 sont alternés pour former le bord périphérique 58 à pourtour octogonal.

Lorsque la partie frangible est enlevée, elle permet au porte-lampe 52 de pénétrer en partie dans la boîte à lumière 56 du module secondaire et à la nervure 54 de prendre appui contre le fond de ladite boîte à lumière, comme on peut le voir notamment sur la figure 7. Il en résulte alors un positionnement axial correct du module secondaire 12 par rapport au module principal 10. En effet, d'une part, les fourches 16 viennent en appui chacune contre une nervure 20 et la nervure 54 vient en appui contre le fond de la boîte à lumière 56.

Cette dernière est munie d'un passage central 66 (figures 1, 2 et 3) traversé par un organe de commande 68 muni d'un ergot 70. L'organe de commande 68 est propre à recevoir un bouton 72 (figure 5). L'autre extrémité de l'organe de commande 68 est reliée à un actionneur mécanique. Dans l'exemple représenté aux figures 6 et 7, l'organe de commande 68 actionne un pignon 74 qui coopère avec un secteur denté 76 solidaire d'un levier 78 dont une extrémité 80 est montée pivotante par rapport à un pivot (non représenté) du module 12. Le levier 78 comporte une autre extrémité 82 destinée à recevoir une extrémité d'un câble (non représenté) propre à agir sur le déplacement d'un organe mécanique ou électrique, par exemple d'un volet d'un appareil de chauffage-climatisation de véhicule automobile.

Le bouton 72 traverse un élément de façade 84 de forme annulaire (figure 5) qui est muni d'une zone d'éclairage 86 en forme d'arc de cercle. Les zones d'éclairage respectives 86 des deux modules secondaires 12 sont éclairées respectivement par les deux lampes 40 lorsque les trois modules sont assemblés.

Dans la forme de réalisation des figures 1 à 7, le module principal 10 comporte son propre élément de façade 42 et, de même, les deux modules secondaires 12 comportent leurs propres éléments de façade respectifs 84; les éléments de façade 42 et 84 possédant leurs propres zones d'éclairage. Les zones d'éclairage respectives des modules secondaires sont éclairées par les moyens d'éclairage du module principal 10. Ce tableau de commande est destiné à être fermé par un masque (non représenté) comportant des découpes adaptées à l'élément de façade 42 et aux deux éléments de façade 84.

Comme on peut le voir notamment sur les figures 2 et 4, les fûts de fixation 18 sont creux et constituent des puits permettant le passage de vis 88 pour la fixation du tableau de commande sur la planche de bord (non représentée) d'un véhicule automobile.

Lorsque la fixation est effectuée, le cache précité peut être mis en place, ce qui dissimule alors les vis.

Dans une variante de réalisation (non représentée), les modules, au lieu d'être fixés directement entre eux par des moyens de fixation conjugués, sont fixés indirectement entre eux sur la planche de bord. En pareil cas, on peut prévoir de fixer lesdits modules directement sur un cadre rigide qui est lui-même fixé à la planche de bord par des moyens de fixation appropriés.

On comprendra que les deux modules secondaires 12 peuvent être placés chacun dans l'une quelconque de quatre positions différentes, ce qui permet de leur donner une orientation choisie.

Cette particularité est intéressante car elle permet de donner à l'actionneur (dans l'exemple le levier 78) une position choisie en fonction des conditions d'implantation spécifiques d'un véhicule donné.

Dans la forme de réalisation de la figure 8, à laquelle on se réfère maintenant, le tableau de commande comporte une façade 90 qui comporte une ouverture circulaire centrale 92 pour le passage du bouton 30 et deux ouvertures circulaires 94 pour le passage des boutons 72.

A la différence de la forme de réalisation précédente, les zones d'éclairage 44 et 46 du module principal et les zones d'éclairage respectives des modules secondaires 12 sont réalisées directement dans l'élément de façade 90. Cependant là encore, les zones d'éclairage respectives des modules secondaires 12 sont éclairées par les moyens d'éclairage ou module principal 10.

Bien entendu, l'invention n'est pas limitée aux formes de réalisation décrites précédemment à titre d'exemple et s'étend à d'autres variantes.

Ainsi, le module principal 10 ainsi que le ou chaque module secondaire 12 peut comporter des organes de commande de différents types, en particulier du type rotatif, du type poussoir ou touche à enfoncement, ou encore du type curseur.

Egalement, la configuration des modules précités et notamment celles de leurs boîtes à lumière respectives sont susceptibles de nombreuses variantes.

De plus, le tableau de commande de l'invention n'est pas limité à la commande d'un dispositif de chauffage-climatisation.

Les moyens de fixation servant à la fixation des modules entre eux ou, en variante, à la fixation des modules sur un cadre support, peuvent revêtir différentes formes. Il peut s'agir notamment de moyens à glissière du genre queue d'aronde et/ou de moyens de fixation par vis, agrafes, chevilles; blocs en caoutchouc, pions, rivets, etc.

## Revendications

1. Tableau de commande pour véhicule automobile, comprenant un module principal (10) et au moins un module secondaire (12) fixé directement sur une face latérale (14) du module principal (10) par des moyens de fixation (16, 18), logeant des organes de commande respectifs ainsi qu'une façade (90) munie d'ouvertures (92, 94) pour le passage des organes de commande, **caractérisé en ce que** le module principal (10) loge un organe de commande (26) et des moyens d'éclairage (40) pour éclairer des zones choisies de la façade et de l'organe de commande (26), et **en ce qu'**au moins un module secondaire (12) loge un organe de commande (68) et est propre à être éclairé par les moyens d'éclairage du module principal par l'intermédiaire d'une fenêtre situé entre le module principal et le module secondaire qui communique avec une fenêtre du module principal.

2. Tableau de commande selon la revendication 1, **caractérisé en ce que** le module principal (10) comporte deux faces latérales opposées (14) propres à permettre chacune la fixation d'un module secondaire (12).

3. Tableau de commande selon l'une des revendications 1 et 2, **caractérisé en ce que** les moyens de fixation sont conjugués et comprennent des premiers moyens (16) prévus sur au moins une face latérale (14) du module principal (10) et des seconds moyens (18) prévus sur au moins une face latérale (15) du module secondaire (12).

4. Tableau de commande selon la revendication 3, **caractérisé en ce que** le module secondaire (12) comporte quatre faces latérales (15) disposées selon une configuration carrée et des seconds moyens de fixation (18) prévus sur chacune des quatre faces latérales, ce qui permet de disposer le module secondaire (12) dans l'une quelconque de quatre positions différentes par rapport au module principal (10).

5. Tableau de commande selon l'une des revendications 1 à 4, **caractérisé en ce que** les moyens de fixation (16, 18) sont des moyens à encliquetage.

6. Tableau de commande selon la revendication 5, **caractérisé en ce que** les moyens de fixation à encliquetage comprennent deux fourches (16) en U prévues sur une face latérale (14) du module principal (10) et propres à coopérer avec deux fûts (18) que comporte le module secondaire (12).

7. Tableau de commande selon la revendication 6, **caractérisé en ce que** le module secondaire (12) comporte quatre fûts (18) d'axes parallèles, disposés aux angles d'un carré et autorisant la fixation du module secondaire (12) dans l'une quelconque de quatre positions différentes par rapport au module principal (10).

8. Tableau de commande selon l'une des revendications 6 et 7, **caractérisé en ce que** chaque fût (18) est creux pour former un puits de passage d'une vis de fixation (88).

9. Tableau de commande selon l'une des revendications 1 à 8, **caractérisé en ce que** le module principal (10) comporte une boîte à lumière (34, 38) dans laquelle sont logés les moyens d'éclairage (40) et munie d'au moins une fenêtre (36) débouchant sur la face latérale (14) pour permettre l'éclairage du module secondaire.

10. Tableau de commande selon la revendication 9, **caractérisé en ce que** la boîte à lumière (34, 38) du module principal (10) comporte deux fenêtres (36) débouchant sur deux faces latérales opposées (14), et **en ce que** les moyens d'éclairage comprennent deux lampes (40) situées dans la boîte à lumière à proximité respectivement de chacune des deux fenêtres (36).

11. Tableau de commande selon la revendication 10, **caractérisé en ce que** la boîte à lumière du module principal (10) comporte une partie principale (34) en forme de croissant propre à éclairer une zone d'éclairage (14) en arc de cercle du module principal.

12. Tableau de commande selon la revendication 11, **caractérisé en ce que** la boîte à lumière comporte deux parties secondaires (38) propres à éclairer chacune une zone d'éclairage circulaire (46) du module principal (10) et aboutissant chacune à une lampe (41) des moyens d'éclairage.

13. Tableau de commande selon l'une des revendications 9 à 12, **caractérisé en ce que** le module secondaire (12) comporte une boîte à lumière (56) munie d'une fenêtre (62) débouchant au niveau d'une face latérale et propre à venir en vis-à-vis d'une fenêtre (36) du module principal (10).

14. Tableau de commande selon la revendication 13, **caractérisé en ce que** la boîte à lumière (56) du module secondaire (12) comporte quatre parties frangibles disposées opposées deux à deux et susceptibles de constituer chacune une fenêtre (62).

15. Tableau de commande selon la revendication 13, prise en combinaison avec la revendication 7, **caractérisé en ce que** la boîte à lumière (56) du module secondaire (12) possède un contour de forme générale octogonale et comporte, de façon alternée, quatre côtés (60) dans lesquels sont prévues les parties frangibles (62) précitées et quatre côtés (64) situés chacun près d'un fût de fixation (18).

16. Tableau de commande selon l'une des revendications 1 à 15, **caractérisé en ce que** l'organe de commande (26) du module principal (10) est un organe rotatif.

17. Tableau de commande selon l'une des revendications 1 à 16, **caractérisé en ce que** l'organe de commande (68) du module secondaire (12) est un organe rotatif.

18. Tableau de commande selon l'une des revendications 1 à 17, **caractérisé en ce que** les zones d'éclairage (44, 46, 86) de la façade sont prévues sur des éléments de façade (42, 84) du module principal (10) et du ou des module(s) secondaire(s) (12).

19. Tableau de commande selon l'une des revendications 1 à 17, **caractérisé en ce que** les zones d'éclairage (44, 46, 86) de la façade sont prévues sur un élément de façade (90) commun au module principal (10) et au(x) module(s) secondaire(s) (12).

## Patentansprüche

1. Steuerpaneel für ein Kraftfahrzeug, umfassend ein Hauptmodul (10) und zumindest ein Nebenmodul (12), unmittelbar festgelegt an einer Lateralfläche (14) des Hauptmoduls (10) mittels einer Befestigungseinrichtung (16, 18), jeweilige Steuereinrichtungen aufnehmend, sowie eine Fassade (90), die mit Öffnungen (92, 94) versehen ist, zum Zwecke des Durchtrittes von Steuereinrichtungen, **dadurch gekennzeichnet, dass** das Hauptmodul (10) eine Steuereinrichtung (26) und eine Beleuchtungseinrichtung (40) zur Beleuchtung von gewählten Zonen der Fassade und der Steuereinrichtung (26) aufnimmt, und dass zumindest ein Nebenmodul (12) eine Steuereinrichtung (68) aufnimmt und beleuchtet werden kann, durch die Beleuchtungseinrichtung des Hauptmoduls unter Zwischenschaltung eines Fensters, befindlich zwischen dem Hauptmodul und dem Nebenmodul, in Verbindung stehend mit einem Fenster des Hauptmoduls.

2. Steuerpaneel nach Anspruch 1, **dadurch gekennzeichnet, dass** das Hauptmodul (10) zwei einander gegenüberstehende Lateralflächen (14) umfasst, geeignet, um jeweils die Befestigung eines Nebenmoduls (12) zu ermöglichen.

3. Steuerpaneel nach einem der Ansprüche 1 und 2, **dadurch gekennzeichnet, dass** die Befestigungseinrichtung aus konjugierten Elementen gebildet ist, umfassend erste Mittel (16), die an zumindest einer Lateralfläche (14) des Hauptmoduls (10) vorgesehen sind, sowie zweite Mittel (18), vorgesehen an zumindest einer Lateralfläche (15) des Nebenmoduls (12).

4. Steuerpaneel nach Anspruch 3, **dadurch gekennzeichnet, dass** das Nebenmodul (12) vier Lateralflächen (15) umfasst, angeordnet entlang einer rechteckförmigen oder quadratischen Konfiguration, wobei zweite Befestigungsmittel (18) an jeder der vier Lateralflächen vorgesehen sind, wodurch es ermöglicht ist, das Nebenmodul (12) in einer beliebigen der vier unterschiedlichen Positionen mit Bezug auf das Hauptmodul (10) anzuordnen.

5. Steuerpaneel nach einem der Ansprüche 1 bis 4, **dadurch gekennzeichnet, dass** die Befestigungseinrichtung (16, 18) Verrastmittel umfasst.

6. Steuerpaneel nach Anspruch 5, **dadurch gekennzeichnet, dass** die Verrastungsbefestigungseinrichtung zwei Gabeln (16) in U-Form umfasst, vorgesehen an einer Lateralfläche (14) des Hauptmoduls (10) und geeignet zur Wechselwirkung mit zwei Zapfen (18), die das Nebenmodul (12) umfasst.

7. Steuerpaneel nach Anspruch 6, **dadurch gekennzeichnet, dass** das Nebenmodul (12) vier Zapfen (18) mit parallelen Achsen umfasst, angeordnet an den Ecken eines Rechteckes oder Quadrates und die Befestigung des Nebenmoduls (12) in einer beliebigen von vier unterschiedlichen Positionen mit Bezug auf das Hauptmodul (10) ermöglichend.

8. Steuerpaneel nach einem der Ansprüche 6 und 7, **dadurch gekennzeichnet, dass** jeder Zapfen (18) hohl ausgebildet ist, um einen Krater auszubilden, zum Zwecke des Durchtrittes einer Befestigungsschraube (88).

9. Steuerpaneel nach einem der Ansprüche 1 bis 8, **dadurch gekennzeichnet, dass** das Hauptmodul (10) ein Lampen- oder Leuchtgehäuse (34, 38) umfasst, in welchem die Beleuchtungseinrichtung (40) aufgenommen ist, und welches mit zumindest einem Fenster (36) versehen ist, mündend an der Lateralfläche (14), um die Beleuchtung des Nebenmoduls zu ermöglichen.

10. Steuerpaneel nach Anspruch 9, **dadurch gekennzeichnet, dass** das Leuchten- oder Lampengehäuse (34, 38) des Hauptmoduls (10) zwei Fenster (36) umfasst, mündend an zwei einander gegenüberstehenden Lateralflächen (14), und dass die Beleuchtungseinrichtung zwei Lampen (40) umfasst, befindlich in dem Leuchtgehäuse in jeweiliger Nachbarschaft eines jeden der zwei Fenster (36).

11. Steuerpaneel nach Anspruch 10, **dadurch gekennzeichnet, dass** das Leuchten- oder Lampengehäuse des Hauptmoduls (10) einen Hauptabschnitt (34) von ansteigender Form umfasst, geeignet zur Beleuchtung einer Beleuchtungszone (14) in Kreisbogenform des Hauptmoduls.

12. Steuerpaneel nach Anspruch 11, **dadurch gekennzeichnet, dass** das Lampen- oder Leuchtgehäuse zwei Sekundär- oder Nebenabschnitte (38) umfasst, geeignet zur jeweiligen Beleuchtung einer kreisförmigen Beleuchtungszone (46) des Hauptmoduls (10) und mündend jeweils bei einer Lampen (41) der Beleuchtungseinrichtung.

13. Steuerpaneel nach einem der Ansprüche 9 bis 12, **dadurch gekennzeichnet, dass** das Nebenmodul (12) ein Lampen- oder Leuchtgehäuse (56) umfasst, versehen mit einem Fenster (62) mündend auf dem Niveau einer Lateral- oder Seitenfläche, und geeignet um angeordnet zu werden gegenüberstehend eines Fensters (36) des Hauptmoduls (10).

14. Steuerpaneel nach Anspruch 13, **dadurch gekennzeichnet, dass** das Lampen- oder Leuchtgehäuse (56) des Nebenmoduls (12) vier zerbrechliche Abschnitte umfasst, angeordnet paarweise gegenüberstehend und in der Lage jeweils ein Fenster (62) auszubilden.

15. Steuerpaneel nach Anspruch 13, wenn abhängig vom Anspruch 7, **dadurch gekennzeichnet, dass** das Leucht- oder Lampengehäuse (56) des Nebenmoduls (12) über eine generell achteckige Konturenform verfügt und in abwechselnder Weise vier Seiten (60), in denen die zerbrechlichen Abschnitte (62) vorgesehen sind und vier Seiten (64) umfasst, befindlich jeweils Nahe zu einem Befestigungszapfen oder -stift (18).

16. Steuerpaneel nach einem der Ansprüche 1 bis 15, **dadurch gekennzeichnet, dass** die Steuereinrichtung (26) des Hauptmoduls (10) eine Rotations- oder Dreheinrichtung ist.

17. Steuerpaneel nach einem der Ansprüche 1 bis 16, **dadurch gekennzeichnet, dass** die Steuereinrichtung (68) des Nebenmoduls (12) eine Dreh- oder Rotationseinrichtung ist.

18. Steuerpaneel nach einem der Ansprüche 1 bis 17, **dadurch gekennzeichnet, dass** die Beleuchtungszonen (44, 46, 86) der Fassade an Fassadenelementen (42, 84) des Hauptmoduls (10) und des oder den Nebenmodul(en) (12) vorgesehen sind.

19. Steuerpaneel nach einem der Ansprüche 1 bis 17, **dadurch gekennzeichnet, dass** die Beleuchtungszonen (44, 46, 86) der Fassade vorgesehen sind, an einem Fassadenelement (90), welches für das Hauptmodul (10) und das oder die Nebenmodul(e) (12) gemeinsam vorgesehen ist.

## Claims

1. Control panel for a motor vehicle, comprising a main module (10) and at least one secondary module (12) fixed directly onto a lateral face (14) of the main module (10) by fixing means (16, 18), housing respective control members as well as a facade (90) complete with apertures (92, 94) for the control members to pass through, **characterised in that** the main module (10) houses a control member (26) and illumination means (40) for illuminating chosen areas of the facade and of the control member (26), and **in that** at least one secondary module (12) houses a control member (68) and is able to be illuminated by the illumination means of the main module by way of a window situated between the main module and the secondary module which communicates with a window of the main module.

2. Control panel according to Claim 1, **characterised in that** the main module (10) includes two opposite lateral faces (14) each able to allow a secondary module (12) to be fixed.

3. Control panel according to one of Claims 1 and 2, **characterised in that** the fixing means are matched and comprise first means (16) provided on at least one lateral face (14) of the main module (10) and second means (18) provided on at least one lateral face (15) of the secondary module (12).

4. Control panel according to Claim 3, **characterised in that** the secondary module (12) includes four lateral faces (15) arranged in a square configuration and second fixing means (18) provided on each of the four lateral faces, which makes it possible to arrange the secondary module (12) in any one of four different positions with respect to the main module (10).

5. Control panel according to one of Claims 1 to 4, **characterised in that** the fixing means (16, 18) are clipping means.

6. Control panel according to Claim 5, **characterised in that** the clipping-type fixing means comprise two U-shaped forks (16) provided on a lateral face (14) of the main module (10) and able to interact with two posts (18) which the secondary module (12) includes.

7. Control panel according to Claim 6, **characterised in that** the secondary module (12) includes four posts (18) with parallel axes, arranged at the angles of a square and allowing the secondary module (12) to be fixed in any one of four different positions with respect to the main module (10).

8. Control panel according to one of Claims 6 and 7, **characterised in that** each post (18) is hollow in order to form a well for a fixing screw (88) to pass through.

9. Control panel according to one of Claims 1 to 8, **characterised in that** the main module (10) includes a light box (34, 38) in which the lighting means (40) are housed and which is equipped with at least one window (36) opening out onto the lateral face (14) in order to allow illumination of the secondary module.

10. Control panel according to Claim 9, **characterised in that** the light box (34, 38) of the main module (10) includes two windows (36) opening out onto two opposite lateral faces (14), and **in that** the illumination means comprise two lamps (40) situated in the light box in proximity respectively to each of the two windows (36).

11. Control panel according to Claim 10, **characterised in that** the light box of the main module (10) includes a main part (34) in crescent shape, capable of illuminating an illumination area (14), in circular-arc shape, of the main module.

12. Control panel according to Claim 11, **characterised in that** the light box includes two secondary parts (38) each able to illuminate a circular illumination area (46) of the main module (10) and each terminating at a lamp (41) of the illumination means.

13. Control panel according to one of Claims 9 to 12, **characterised in that** the secondary module (12) includes a light box (56) complete with a window (62) opening out onto a lateral face and capable of coming opposite a window (36) of the main module (10).

14. Control panel according to Claim 13, **characterised in that** the light box (56) of the secondary module (12) includes four frangible parts arranged in opposing pairs and each capable of constituting a window (62).

15. Control panel according to Claim 13, taken in combination with Claim 7, **characterised in that** the light box (56) of the secondary module (12) possesses a contour of generally octagonal shape and, alternately, includes four sides (60) in which are provided the above-mentioned frangible parts (62) and four sides (64) each situated close to a fixing post (18).

16. Control panel according to one of Claims 1 to 15, **characterised in that** the control member (26) of the main module (10) is a rotary member.

17. Control panel according to one of Claims 1 to 16, **characterised in that** the control member (68) of the secondary module (12) is a rotary member.

18. Control panel according to one of Claims 1 to 17, **characterised in that** the illumination areas (44, 46, 86) of the facade are provided on facade elements (42, 84) of the main module (10) and of the secondary module(s) (12).

19. Control panel according to one of Claims 1 to 17, **characterised in that** the illumination areas (44, 46, 86) of the facade are provided on a facade element (90) common to the main module (10) and to the secondary module(s) (12).
